# EUROPÄISCHE PATENTSCHRIFT

(11) **EP 4 264 973 B1**
(45) Veröffentlichungstag und Bekanntmachung des Hinweises auf die Patenterteilung: **28.01.2026**
(21) Anmeldenummer: 21843910.7
(22) Anmeldetag: 20.12.2021
(51) Int. Cl.: H04W 4/44, G07B 15/06

(54) **VERFAHREN UND VORRICHTUNG ZUR ZUORDNUNG EINER IDENTIFIZIERUNGSINFORMATION UND IDENTIFIZIERUNGSDATEN ZU EINEM FAHRZEUG**
METHOD AND DEVICE FOR ASSIGNING IDENTIFICATION INFORMATION AND IDENTIFICATION DATA TO A VEHICLE
PROCÉDÉ ET DISPOSITIF D'ATTRIBUTION D'INFORMATIONS D'IDENTIFICATION ET DE DONNÉES D'IDENTIFICATION À UN VÉHICULE

(30) Priorität: 18.12.2020 DE 102020134212
(43) Veröffentlichungstag der Anmeldung: 25.10.2023
(73) Patentinhaber: Jenoptik Robot GmbH, 40789 Monheim (DE)
(72) Erfinder: KIENITZ, Stefan, 47249 Duisburg (DE); TRUMMER, Michael, 31137 Hildesheim (DE); STEDING, Marius, 31135 Hildesheim (DE); SCHAARE, Thomas, 31188 Holle (DE)
(74) Vertreter: Waldauf, Alexander
(86) Internationale Anmeldenummer: PCT/EP2021/086856
(87) Internationale Veröffentlichungsnummer: WO 2022/129638

(56) Entgegenhaltungen:
- EP-A1- 3 418 981

## Beschreibung

Der hier vorgestellte Ansatz schafft ein Verfahren und eine Vorrichtung zur Zuordnung einer Identifizierungsinformation und Identifizierungsdaten zu einem Fahrzeug gemäß den Hauptansprüchen.

Verkehrskontrollgeräte (die auch als Road-Side-Units, RSUs bezeichnet werden können) messen und empfangen oftmals Daten zu einem Fahrzeug mit unterschiedlichen technischen Mitteln, um eine eindeutige Identifizierung eines Fahrzeugs in einem Überwachungsbereich einer Überwachungsvorrichtung zu ermöglichen. Dabei sind oftmals Daten des Fahrzeugs wie beispielsweise die Position des Fahrzeugs in dem Überwachungsbereich, Sendeort und Ort bei Empfang nicht notwendigerweise identisch. Messzeitpunkt und Empfangszeitpunkt sind ebenfalls nicht notwendigerweise identisch. Allerdings besteht oftmals die Problematik, eine eindeutige Zuordnung von Daten zu einem Fahrzeug in dem Überwachungsbereich vornehmen zu können. Dies gilt insbesondere dann, mehrere Fahrzeuge in dem Überwachungsbereich der Überwachungsvorrichtung erkannt werden, wie es beispielsweise bei einer Fahrt im Stau oder bei einem Überholvorgang, insbesondere bei LKWs direkt vor der Übertragungsvorrichtung auftreten kann. Diesem Fall soll jedoch eine eindeutige Zuordnung bzw. Identifizierung eines bzw. jedes der Fahrzeuge ermöglicht werden, was mit derzeit bestehenden Systemen oftmals problematisch ist. Diese Systeme weisen somit eine geringe Zuordnungssicherheit auf, sodass Mehrdeutigkeiten nicht sicher aufgelöst werden können. Eine binäre Entscheidung solcher Systeme, dass eine Fahrzeugidentifikation "normal" oder "anormal", also nicht möglich ist, ist oftmals für die gewünschten Einsatzzwecke zu ungenau.

Das Dokument EP 3 418 981 A1 offenbart ein System und ein Verfahren zur Überprüfung von elektronischen Transaktionen.

Vor diesem Hintergrund mit dem hier vorgeschlagenen Ansatz ein verbessertes Verfahren und eine verbesserte Vorrichtung zur Zuordnung einer Identifizierungsinformation zumindest eines Fahrzeugs in einem Überwachungsbereich einer Überwachungsvorrichtung zu Identifizierungsdaten gemäß den Hauptansprüchen vorgeschlagen.

Es wird ein Verfahren zur Zuordnung einer Identifizierungsinformation zumindest eines Fahrzeugs in einem Überwachungsbereich einer Überwachungsvorrichtung und
Identifizierungsdaten zu dem Fahrzeug vorgestellt, wobei die Identifizierungsdaten von einer Sendeeinheit des Fahrzeugs empfangen wurden, wobei das Verfahren die folgenden Schritte aufweist:
- Einlesen der Identifizierungsinformation und der Identifizierungsdaten, wobei die Identifizierungsinformation aus Bilddaten eines von der Überwachungsvorrichtung
- Einlesen der Identifizierungsinformation und der Identifizierungsdaten, wobei die Identifizierungsinformation aus Bilddaten eines von der Überwachungsvorrichtung aufgenommenen Bildes des in dem Überwachungsbereich fahrenden Fahrzeugs erhalten wurden und die Identifizierungsdaten von einer Sendeeinheit des Fahrzeugs empfangen wurden, wobei der Identifizierungsinformation ein den Zeitpunkt des Einlesens der Identifizierungsinformation repräsentierender Informationszeitstempel und den Identifizierungsdaten ein den Zeitpunkt des Empfangens der Identifizierungsdaten repräsentierender Datenzeitstempel zugeordnet wird, wobei im Schritt des Einlesens in der Identifizierungsinformation ferner ein das Fahrzeug eindeutig repräsentierendes Kennzeichen eingelesen wird und in den Identifizierungsdaten ein das Fahrzeug eindeutig repräsentierendes Kennmerkmal eingelesen wird; und
- Zuordnen der Identifizierungsinformation und der Identifizierungsdaten zu dem Fahrzeug, wenn eine Zeitdifferenz zwischen dem Informationszeitstempel und dem Datenzeitstempel nicht größer als eine Schwellwertzeitdifferenz ist und wenn das Kennzeichen und das Kennmerkmal innerhalb eines Toleranzbereichs übereinstimmen oder
   ∘ Abspeichern der Identifizierungsinformation und der Identifizierungsdaten für eine Zuordnung der Identifizierungsinformation und der Identifizierungsdaten zu dem Fahrzeug zu einem nachfolgenden Zeitpunkt, wenn eine Zeitdifferenz zwischen dem Informationszeitstempel und dem Datenzeitstempel größer als eine Schwellwertzeitdifferenz ist oder
   ∘ Abspeichern der Identifizierungsinformation und der Identifizierungsdaten für eine Zuordnung der Identifizierungsinformation und der Identifizierungsdaten zu dem Fahrzeug zu einem nachfolgenden Zeitpunkt, wenn das Kennzeichen und das Kennmerkmal nicht innerhalb eines Toleranzbereichs übereinstimmen.

Unter einer Identifizierungsinformation kann vorliegend eine Information verstanden werden, welche aus Bilddaten gewonnen wird, beispielsweise durch maschinelle Auswertung eines Bildes der Überwachungsvorrichtung eines in dem Überwachungsbereich fahrenden Fahrzeugs. Hierzu kann beispielsweise die Identifizierungsinformation ein automatisch aus dem Bild ausgelesenes Kennzeichen des Fahrzeugs repräsentieren. Unter Identifizierungsdaten kann beispielsweise ein Datensatz empfangen werden, der von einer in dem Fahrzeug mitgeführten Sendeeinrichtung an die Überwachungsvorrichtung übersandt wurde und der ein Kennmerkmal aufweist, welches beispielsweise als elektronisch codiertes Nummernschild, das Fahrzeug eindeutig identifiziert. Unter einem Kennzeichen bzw. einem Kennmerkmal kann somit beispielsweise eine elektronisch codierte Fassung des amtlichen Kennzeichens des Fahrzeugs verstanden werden. Das Kennzeichen kann beispielsweise durch eine elektronische Auswertung der optischen Bilddaten des Bildes ermittelt werden; das Kennmerkmal kann beispielsweise aus einer von der Sendeeinheit des Fahrzeugs erhaltenen Übertragungssequenz ausgelesen werden. Eine derartige Ausführungsform bietet den Vorteil, eine schnelle und präzise Information zu erhalten, die eine eindeutige Identifizierung des Fahrzeugs ermöglicht. Unter einem Informationszeitstempel kann ein elektronisch codierter Zeitpunkt verstanden werden, der der Identifizierungsinformation hinzugefügt wird und der eine Information liefert, wann die Identifizierungsinformation von der Überwachungsvorrichtung erkannt bzw. eingelesen wurde. Analog kann unter dem Datenzeitstempel ein elektronisch codierter Zeitpunkt verstanden werden, der den Identifizierungsdaten hinzugefügt wird und eine Information liefert, wann die Identifizierungsdaten in der Überwachungsvorrichtung empfangen bzw. eingelesen wurden. Unter einer Schwellwertzeitdifferenz kann ein vordefinierter Wert verstanden werden, um den der Informationszeitstempel gegenüber dem Datenzeitstempel maximal eingelesen werden darf, um noch eine gültige Zuordnung der Identifizierungsinformation und der Identifizierungsdaten zu dem Fahrzeug zuzulassen. Unter einem Toleranzbereich kann vorstehend beispielsweise verstanden werden, dass in dem Kennzeichen und dem Kennmerkmal eine Anzahl von Symbolen enthalten ist, wobei eine Übereinstimmung des Kennzeichens mit dem Kennmerkmal auch dann erkannt werden kann, wenn beispielsweise die Anzahl oder Reihenfolge der Symbole um bis zu 10 % von einer identischen Übereinstimmung abweicht.

Der hier vorgestellte Ansatz basiert auf der Erkenntnis, dass eine valide und zuverlässige Zuordnung einer Identifizierungsinformation und Identifizierungsdaten zu einem Fahrzeug dann vorgenommen werden kann, wenn ein durch den Informationszeitstempel repräsentierter Zeitpunkt um nicht mehr als die Schwellwertzeitdifferenz von einem Zeitpunkt abweicht, der durch den Datenzeitstempel repräsentiert ist. Ist dies nicht der Fall, weicht also der durch den Informationszeitstempel repräsentierte Zeitpunkt um mehr als die Schwellwertzeitdifferenz von dem durch den Datenzeitstempel repräsentierten Zeitpunkt ab, so ist dies als unsicherer Zustand für die Zuordnung oder Identifizierung des Fahrzeugs zu werten, wobei gemäß dem hier vorgestellten Ansatz zu einem späteren Zeitpunkt nochmals eine Zuordnung der Identifizierungsinformation und der Identifizierungsdaten zu dem Fahrzeug vorgesehen sein soll. Hierzu werden die Identifizierungsinformation und die Identifizierungsdaten abgespeichert. Ein solcher nochmaliger Versuch der Zuordnung der Identifizierungsinformation und der Identifizierungsdaten zu dem Fahrzeug zu einem späteren Zeitpunkt ermöglicht vorteilhaft die Berücksichtigung von weiteren Informationen bezüglich des Fahrzeugs oder eines weiteren Fahrzeugs in dem Überwachungsbereich, sodass dann beispielsweise zu einem späteren Zeitpunkt dennoch eine valide und zuverlässige Zuordnung der Identifizierungsinformationen und Identifizierungsdaten zu dem Fahrzeug möglich werden kann. Auf diese Weise kann mit dem hier vorgestellten Ansatz des Zurückstellens und des späteren Zuordnens eine sichere Identifizierung des Fahrzeugs in Überwachungsbereich erfolgen, sodass dann auch weitere Funktionen für das identifizierte Fahrzeug genutzt werden können, beispielsweise eine rechtsgültige Bestimmung eines Mautpreises, der für die Fahrt des Fahrzeugs zumindest im Überwachungsbereich zu entrichten ist oder eine rechtsgültige Dokumentation eines Verkehrsrechtsverstoßes durch dieses Fahrzeug im Überwachungsbereich. Diese beiden beispielhaften Nutzungen der Verkehrsüberwachung bedingen jeweils eine zuverlässige, eindeutige und valide Identifizierung des Fahrzeugs im Überwachungsbereich. Insofern weist der hier vorgestellte Ansatz den Vorteil auf, eine deutliche Verbesserung der Identifizierung eines Fahrzeugs in einem Überwachungsbereich zu ermöglichen.

Der hier beschriebene Ansatz ermöglicht somit beispielsweise auch eine Zuordnung aller gemessenen und empfangenen Daten zu einem Fahrzeug-individuellen Container (d. h. beispielsweise eines Elements innerhalb der Software der RSU), welcher jenes Fahrzeug eindeutig repräsentiert, auf welches sich gemessene und empfangene Daten beziehen.

Auch kann gemäß einer weiteren Ausführungsform im Schritt des Einlesens als Kennzeichen und/oder als Kennmerkmal ferner ein Gewicht, eine Achsanzahl und/oder ein Fahrzeugtyp des Fahrzeugs ermittelt werden. Eine solche Information, die beispielsweise durch eine Auswertung der optischen Bilddaten oder eine Schätzung beispielsweise unter Verwendung von von Referenzwerten ausgeführt werden kann, ermöglicht eine zusätzliche Plausibilitätsüberprüfung, ob die eingelesenen Informationen bzw. Daten korrekt sein können. Auf diese Weise lässt sich nochmals eine Erhöhung der Zuverlässigkeit einer Zuordnung der Identifizierungsinformation und der Identifizierungsdaten zu dem Fahrzeug erreichen.

Denkbar ist ferner auch eine Ausführungsform des hier vorgestellten Ansatzes, bei der im Schritt des Einlesens Identifizierungsinformationen von mehreren Fahrzeugen eingelesen werden, die aus den Bilddaten von mehreren in dem Überwachungsbereich fahrenden Fahrzeugen erhalten wurden und wobei im Schritt des Einlesens Identifizierungsdaten von mehreren Fahrzeugen eingelesen werden, die von Sendeeinheiten der Fahrzeuge empfangen wurden, wobei im Schritt des Zuordnens diejenige Identifizierungsinformation und diejenigen Identifizierungsdaten dem Fahrzeug zugeordnet werden, deren Kennzeichen und Kennmerkmal innerhalb des Toleranzbereichs übereinstimmen und deren Zeitdifferenz zwischen dem Informationszeitstempel und dem Datenzeitstempel nicht größer als die Schwellwertzeitdifferenz ist. Eine solche Ausführungsform bietet den Vorteil, eine möglichst gute Identifizierung von einzelnen einer Mehrzahl von Fahrzeugen zu ermöglichen, die als in dem Überwachungsbereich fahrend erkannt werden.

Auch können gemäß einer anderen Ausführungsform im Schritt des Zuordnens die Identifizierungsinformation und die Identifizierungsdaten nicht dem Fahrzeug zugeordnet werden, wenn der Informationszeitstempel um mehr als die Schwellwertzeitdifferenz von dem Datenzeitstempel abweicht und das Kennzeichen nicht mit dem Kennmerkmal übereinstimmen. Eine solche Ausführungsform bietet den Vorteil, auch eine eindeutige Fehlermeldung bereitstellen zu können, wenn mit den verfügbaren Informationen keine eindeutige Identifizierung des Fahrzeugs in dem Überwachungsbereich möglich erscheint. In diesem Fall kann beispielsweise eine Überprüfung der Verkehrssituation im Überwachungsbereich durch eine Person angestoßen oder angefordert werden.

Besonders vorteilhaft ist eine Ausführungsform des hier vorgeschlagenen Ansatzes, bei der einen wiederholt ausgeführten Schritt des Zuordnens der abgespeicherten Identifizierungsinformation und der abgespeicherten Identifizierungsdaten oder einer nachfolgend eingelesenen Identifizierungsinformation und nachfolgend eingelesenen Identifizierungsdaten zu dem Fahrzeug, wobei der wiederholt ausgeführte Schritt des Zuordnens unter Verwendung von weiteren oder erneut eingelesenen Identifizierungsinformationen und/oder weiteren oder nachfolgend eingelesenen Identifizierungsdaten erfolgt, wobei die weiteren Identifizierungsinformation aus Bilddaten eines von der Überwachungsvorrichtung aufgenommenen Bildes des in dem Überwachungsbereich fahrenden weiteren Fahrzeugs erhalten wurden und/oder die weiteren Identifizierungsdaten von der Sendeeinheit eines weiteren Fahrzeugs empfangen wurden. Eine solche Ausführungsform macht sich zu Nutze, dass die abgespeicherte Identifizierungsinformation und die abgespeicherte Identifizierungsdaten nun zu einem späteren Zeitpunkt unter Verwendung von weiteren Informationen wie beispielsweise der zumindest einen weiteren Identifizierungsinformation und/oder der weiteren Identifizierungsdaten nun besser dem Fahrzeug zugeordnet werden können, da beispielsweise zu diesem späteren Zeitpunkt diese weiteren Informationen Hinweise darauf geben, welche Identifizierungsinformationen und welche Identifizierungsdaten dem Fahrzeug individuell und eindeutig zuzuordnen sind.

Denkbar ist weiterhin eine Ausführungsform des hier vorgeschlagenen Ansatzes, bei der der Schritt des Zuweisens nach einer vordefinierten Zeitspanne nach dem Schritt des Zuordnens ausgeführt wird. Eine solche vordefinierte Zeitspanne kann beispielsweise im Bereich von Millisekunden oder Sekunden liegen. Eine solche Ausführungsform bietet den Vorteil, durch das abwarten dieser vordefinierten Zeitspanne eine Änderung der Verkehrssituation im Überwachungsbereich abwarten zu können, die eine eindeutige und präzise Zuordnung der Identifikationsinformationen und der Identifikationsdaten zu dem Fahrzeug ermöglicht.

Besonders günstig ist eine Ausführungsform des hier vorgeschlagenen Ansatzes, bei der im Schritt des Einlesens die Identifizierungsinformation unter Verwendung einer Fahrzeugkennzeichen-Erkennungsalgorithmus aus einer Analyse des Bildes eines Fahrzeuges bestimmt wird und/oder wobei im Schritt des Einlesens die ein von der Sendeeinheit des Fahrzeugs ausgesandtes Fahrzeugkennzeichen eingelesen werden. Eine solche Ausführungsform bietet den Vorteil der Verwendung von ausgereiften und präzisen Verfahren zur Ermittlung der Identifizierungsinformation sowie der Identifizierungsdaten, sodass eine zuverlässige Zuordnung der Identifizierungsinformation und der Identifizierungsdaten zu dem Fahrzeug ermöglicht wird.

Besonders vorteilhaft ist eine Ausführungsform des hier vorgeschlagenen Ansatzes, die als Verfahren zur Identifizierung eines Fahrzeugs in einem Überwachungsbereich einer Überwachungsvorrichtung realisiert ist, wobei dieses Verfahren die folgenden Schritte aufweist:
- die Schritte des Verfahrens zur Zuordnung einer Identifizierungsinformation zumindest eines Fahrzeugs in einem Überwachungsbereich einer Überwachungsvorrichtung und Identifizierungsdaten zu dem Fahrzeug gemäß einer hier vorgestellten Variante; und
- Klassieren desjenigen Fahrzeugs als identifiziertem Fahrzeug, dem die Identifizierungsinformation und die Identifizierungsdaten zugeordnet wurden.

Schließlich ist auch eine Ausführungsform des hier vorgeschlagenen Verfahrens besonders günstig, bei der ein Verfahren zur Überwachung eines Verkehrs in einem Überwachungsbereich einer Überwachungsvorrichtung umgesetzt ist, wobei dieses Verfahren die folgenden Schritte aufweist:
- die Schritte des Verfahrens zur Identifizierung eines Fahrzeugs in einem Überwachungsbereich einer Überwachungsvorrichtung gemäß einer hier vorgestellten Variante; und
- Ermitteln eines Mautpreises, der für die Fahrt des identifizierten Fahrzeugs in dem Überwachungsbereich zu entrichten ist und/oder Dokumentieren eines Verkehrsregelverstoßes des identifizierten Fahrzeugs.

Durch ein solches Verfahren lassen sich die vorstehend genannten Vorteile einerseits technisch einfach realisieren und Gewinn bringend nutzen.

Diese Verfahren können beispielsweise in Software oder Hardware oder in einer Mischform aus Software und Hardware beispielsweise in einem Steuergerät implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrundeliegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Einsatzszenarios, in welchem der hier vorgeschlagene Ansatz einer Vorrichtung eingesetzt werden kann, samt einem Blockschaltbild eines Ausführungsbeispiels einer hier vorgestellten Vorrichtung;
Fig. 2 ein Ablaufdiagramm eines Ausführungsbeispiels eines Verfahrens; und
Fig. 3 ein weiteres Ablaufdiagramm eines detaillierten Ausführungsbeispiels eines Verfahrens.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

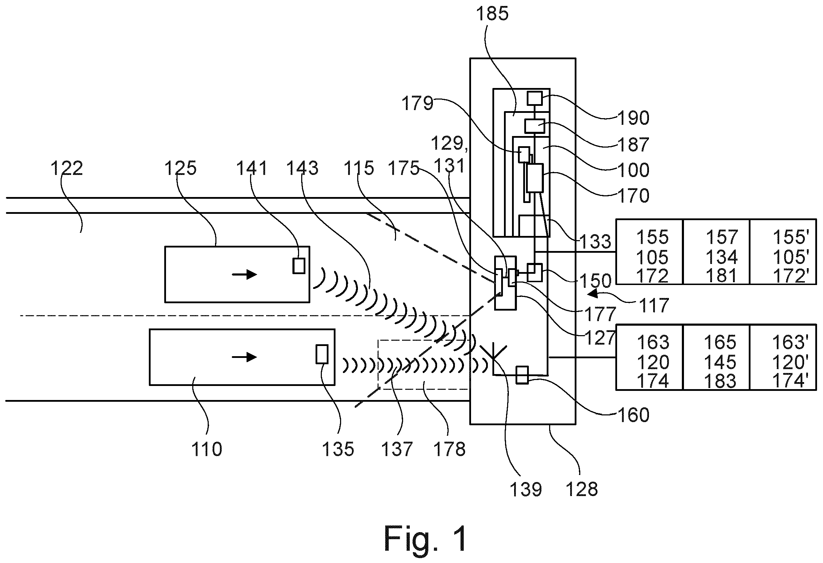

Figur 1 zeigt eine schematische Darstellung eines Einsatzszenarios, in welchem der hier vorgeschlagene Ansatz einer Vorrichtung 100 zur Zuordnung einer Identifizierungsinformation 105 zumindest eines Fahrzeugs 110 in einem Überwachungsbereich 115 einer Überwachungsvorrichtung 117 und Identifizierungsdaten 120 zu dem Fahrzeug 110 eingesetzt werden kann. Gezeigt ist in der Figur 1 das Fahrzeug 110, welches, ohne Beschränkung der Allgemeinheit, beispielsweise als Lastkraftwagen ausgebildet ist und auf einer Fahrbahn 122 fährt. Die Fahrbahn 122 ist beispielsweise Teil einer Autobahn und somit günstigerweise zweispurig ausgebildet. Ferner ist in der Figur 1 ein weiteres Fahrzeug 125 zu erkennen, welches in die gleiche Fahrtrichtung des Fahrzeugs 110 fährt und dieses überholt.

Um nun beispielsweise eine Verkehrsüberwachung (beispielsweise die Überwachung und Ahndung von Verkehrsverstößen wie beispielsweise die Durchführung einer Geschwindigkeitskontrolle oder die Berechnung eines Mautpreises für die Benutzung der Straße bzw. der Fahrbahn 122 durch das Fahrzeug 110 oder das weitere Fahrzeug 125) vornehmen zu können, ist eine eindeutige Identifizierung des Fahrzeugs 110 und/oder des weiteren Fahrzeugs 125 erforderlich. Diese eindeutige Identifizierung des Fahrzeugs 110 bzw. des weiteren Fahrzeugs 125 kann hierbei einerseits durch unter Verwendung einer Auswertung eines von einer Kameraeinheit 127 als Teil der (beispielsweise in einer Messbrücke 128 über der Fahrbahn 122 angeordneten) Überwachungsvorrichtung 117 erhaltenen optischen Bildes 129 bzw. den entsprechenden Bilddaten 131 erfolgen, die in der Identifizierungsinformation 105 resultiert, welche von der Einleseschnittstelle 133 der Vorrichtung 100 eingelesen werden kann. Analog kann auch eine eindeutige Identifizierung des weiteren Fahrzeugs 125 unter Verwendung einer Auswertung eines von der Kameraeinheit 127 als Teil der Überwachungsvorrichtung 117 erhaltenen optischen Bildes 129 bzw. den entsprechenden Bilddaten 131 erfolgen, die in einer weiteren Identifizierungsinformation 134 resultiert, welche ebenfalls von der Einleseschnittstelle 133 eingelesen werden.

Um eine besonders sichere Identifizierung des Fahrzeugs 110 bzw. des weiteren Fahrzeugs 125 zu erreichen, ist weiterhin eine Sendeeinheit 135 in dem Fahrzeug 110 verbaut oder angeordnet, welche (beispielsweise drahtlos) ein Identifizierungssignal 137 an eine Empfangseinheit 139, beispielsweise eine Antenne der Überwachungsvorrichtung 117, sendet, von welcher aus dem Identifizierungssignal 137 erhaltene Identifizierungsdaten 120 ebenfalls an die Einleseschnittstelle 133 übermittelt und dort in die Vorrichtung 100 eingelesen werden. Analog kann beispielsweise auch das weitere Fahrzeug 125 eine weitere Sendeeinheit 141 aufweisen, die ein weiteres Identifizierungssignal 143 aussendet, welches ebenfalls von der Empfangseinheit 139 empfangen wird, wobei dann aus diesem weiteren Identifizierung 143 weitere Identifizierungsdaten 145 ermittelt und der Einleseschnittstelle 133 bereitgestellt werden.

Weiterhin ist eine erste Zeitstempeleinheit 150 vorgesehen, um den Identifizierungsinformation 105 einen Informationszeitstempel 155 bzw. der weiteren Identifizierungsinformationen 134 weiteren Informationszeitstempel 157 zuzuordnen. Auch ist eine zweite Zeitstempeleinheit 160 vorgesehen, um den Identifizierungsdaten 120 einen Datenzeitstempel 163 bzw. den weiteren Identifizierungsdaten einer weiteren Datenzeitstempel 165 zuzuordnen. Diese Zeitstempel geben dabei denjenigen Zeitpunkt an, an dem die betreffende Identifizierungsinformationen 105 bzw. 134 an oder in der Kameraeinheit 127 erfasst bzw. ermittelt worden ist und/oder denjenigen Zeitpunkt, zu dem die Identifizierungsdaten 120 bzw. die weiteren Identifizierungsdaten 142 an der Empfangseinheit 130 empfangen oder als solche ermittelt wurden. Dabei können die Uhren der ersten Zeitstempeleinheit 150 und der zweiten Zeitstempeleinheit 160 synchronisiert sein und/oder voneinander abweichen, wobei jedoch günstiger Weise ein Offset zwischen den beiden Uhren der jeweiligen Zeitstempeleinheiten 150 und 160 bekannt sein sollte. Auf diese Weise kann der Vorrichtung 100 in einer Zuordnungseinheit 170, in welche die Identifizierungsinformationen 105 samt dem zugeordneten Informationszeitstempel 155, die weitere Identifizierungsinformation 134 samt dem zugeordneten weiteren Informationszeitstempel 157, die Identifizierungsdaten 120 samt dem zugeordneten Datenzeitstempel 163 und die weiteren Identifizierungsdaten 145 samt dem zugeordneten weiteren Datenzeitstempel 165 übertragen werden. Wird nun beispielsweise in der Zuordnungseinheit 170 erkannt, dass der Informationszeitstempel um nicht mehr als die Schwellenwertzeitdifferenz von dem Datenzeitstempel 163 abweicht, kann somit davon ausgegangen werden, dass die aus den Bilddaten 131 erhaltene Identifizierungsinformation 105 im Wesentlichen zeitgleich zu den Identifizierungsdaten 120 erhalten wurde und somit dem Fahrzeug 110 zugeordnet werden können. Dies gilt insbesondere dann auch für ein Kennzeichen 172, welches in der Identifizierungsinformation 105 codiert ist, im Wesentlichen einem Kennmerkmal 174 entspricht, welches in den Informationsdaten 120 enthalten ist. Das Kennzeichen 172 kann dabei aus den von einer Kamera 175 der Kameraeinheit 127 erfassten Bilddaten 131 in einer Analyseeinheit 177 extrahiert werden, beispielsweise durch Auswertung der Bilddaten 131 hinsichtlich eines in dem Bild 129 abgebildeten Fahrzeugkennzeichens des Fahrzeugs 110. Auf diese Weise kann sichergestellt werden, dass die Identifizierungsinformationen 105 im Wesentlichen zu den Identifizierungsdaten 120 zeitlich passt, sodass die Zuordnung der Identifizierungsinformationen 105 und der Identifizierungsdaten 120 als sehr präzise und valide gelten kann. Denkbar ist jedoch auch, dass die Analyseeinheit 177 und/oder eine Einheit zur Extraktion des Kennmerkmals 174 aus den Informationsdaten 120 als in der Vorrichtung 100 angeordnet betrachtet werden kann. Die Extraktion des Kennzeichens 172 und/oder des Kennmerkmals 174 braucht daher nicht zwingend außerhalb der Vorrichtung 117 oder eines entsprechenden Verfahrens erfolgen und als solches eingelesen werden.

Denkbar ist jedoch auch ein Szenario, in welchem die Zeitdifferenz zwischen dem Informationszeitstempel 155 und dem Datenzeitstempel 163 größer die Schwellwertzeitdifferenz ist und/oder das Kennzeichen und das Kennmerkmal im Wesentlichen nicht übereinstimmen. Ein solches Szenario kann beispielsweise dann auftreten, wenn eine eindeutige Zuordnung der Identifizierungsinformationen 105 bzw. der Identifizierungsdaten 120 zu dem Fahrzeug 110 nicht möglich ist, beispielsweise wenn das Fahrzeug 110 und das weitere Fahrzeug 125 sehr langsam eine geringe Relativgeschwindigkeit zueinander haben (beispielsweise im Falle des Überholens und/oder einer Fahrt im Stau). Alternativ oder zusätzlich ist ferner denkbar, dass vor dem Fahrzeug 110 ein Vorgängerfahrzeug 178 fährt und einen Teil oder das gesamte Kennzeichen des Fahrzeugs 110 verdeckt. In einem solchen Fall könnte beispielsweise das Kennzeichen des Weiteren Fahrzeugs 125 durch die Analyseeinheit 177 ausgelesen werden und dem Fahrzeug 110 zugeordnet werden. Auch kann bei einer Verwendung einer falsch codierten Sendeeinheit 135 bzw. einer weiteren Sendeeinheit 141, gegebenenfalls in betrügerischer Absicht, eine eindeutige Zuordnung der Identifizierungsinformation 105 und der Identifizierungsdaten 120 zu dem Fahrzeug 110 unmöglich sein, sodass die Verkehrsüberwachung nicht zuverlässig durchgeführt werden kann.

Um eine solche Situation lösen zu können, können die Identifizierungsinformation 105 samt dem zugehörigen Informationszeitstempel 155 und die Identifizierungsdaten 120 samt dem zugehörigen Datenzeitstempel 163 in einen Speicher 179 abgespeichert werden und zu einem späteren Zeitpunkt wieder in der Zuordnungseinheit 170 mit einer nachfolgend eingelesenen Identifizierungsinformation 105' (samt einem zugehörigen Informationszeitstempel 155' und gegebenenfalls erkanntem Kennzeichen 172') und nachfolgend eingelesenen Identifizierungsdaten 120' (samt einem zugehörigen Datenzeitstempel 163'und gegebenenfalls erkanntem Kennmerkmal 174') verknüpft werden. Weicht dann beispielsweise der durch den nachfolgend eingelesenen Informationszeitstempel 155' repräsentierte Zeitpunkt um nicht mehr als die Schwellwertzeitdifferenz von dem durch den nachfolgend eingelesenen Datenzeitstempel 165' ab, können die Identifizierungsinformation 105 und die Identifizierungsdaten 120 und/oder die nachfolgend eingelesene Identifizierungsinformation 105' und die nachfolgend eingelesenen Identifizierungsdaten 120' sehr genau und valide dem Fahrzeug 110 zugeordnet werden. Durch diese zeitlich nachgelagerten Verarbeitung können dann beispielsweise weitere Informationen mitberücksichtigt werden, welche sich nach der vorausgehenden Erfassung der Identifizierungsinformation 105 bzw. Identifizierungsdaten 120 verändert haben, sodass beispielsweise eine veränderte Position des Fahrzeugs 110 gegenüber dem weiteren Fahrzeug 125 aus den Bilddaten 131 gewonnen werden kann, wodurch beispielsweise das Kennzeichen 172' besser oder nun eindeutig erkennbar ist und somit eine eindeutige Zuordnung zu dem Fahrzeug 110 bzw. dem weiteren Fahrzeug 125 zulässt.

Zugleich kann natürlich auch für die weitere Identifizierungsinformation 135 ein entsprechendes weiteres Kennzeichen 181 ermittelt werden, das beispielsweise dem Fahrzeugkennzeichen des Weiteren Fahrzeugs 125 entspricht. Analog kann auch ein weiteres Kennmerkmal 183 ermittelt werden, das beispielsweise dem in den weiteren Identifizierungsdaten 145 codierten Fahrzeugkennzeichen des Weiteren Fahrzeugs 125 entspricht. In der Zuordnungseinheit 170 kann dann auch auf eine zur vorstehend beschriebenen Vorgehensweise eine Zuordnung der weiteren Identifizierungsinformation 134 und der weiteren Identifizierungsdaten 145 zu dem weiteren Fahrzeug 125 erfolgen, sodass auch mit dem hier vorgestellten Ansatz mehrere in dem Überwachungsbereich 115 fahrende Fahrzeuge 110 oder 125 eindeutig identifiziert werden können.

Ein Ergebnis des vorstehend vorgestellten Ansatzes kann nun in einer Vorrichtung 185 zur Identifizierung eines Fahrzeugs 110 in dem Überwachungsbereich 115 der Überwachungsvorrichtung 117 verwendet werden, wobei diese Vorrichtung 185 neben der Vorrichtung 100 eine Klassierungseinheit 187 aufweist, die ausgebildet ist, um dasjenige Fahrzeug als identifiziertes Fahrzeug zu klassieren, dem die Identifizierungsinformation 105 und die Identifizierungsdaten 120 zugeordnet wurden. Schließlich umfasst die Überwachungsvorrichtung 117, die zur Überwachung eines Verkehrs in dem Überwachungsbereich 115 ausgebildet ist noch eine Ermittlungs- und/oder Dokumentiereinheit 190, die ausgebildet ist, um einen Mautpreis zu ermitteln, der für die Fahrt des identifizierten Fahrzeugs 110 in dem Überwachungsbereich 115 zu entrichten ist und/oder um einen Verkehrsregelverstoß des identifizierten Fahrzeugs 110 zu dokumentieren.

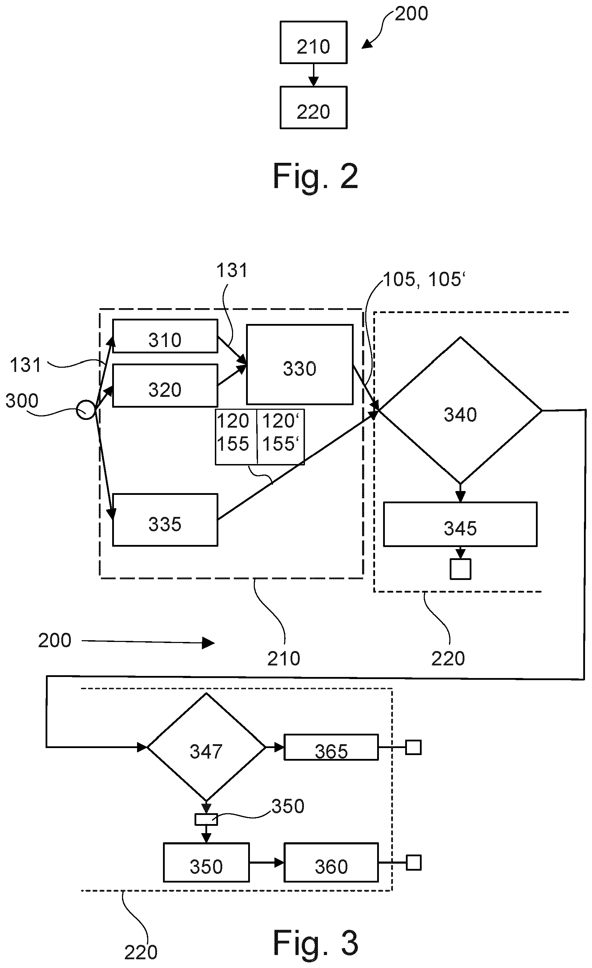

Fig. 2 zeigt ein Ablaufdiagramm eines Verfahrens 200 zur Zuordnung einer Identifizierungsinformation zumindest eines Fahrzeugs in einem Überwachungsbereich einer Überwachungsvorrichtung und Identifizierungsdaten zu dem Fahrzeug, wobei die Identifizierungsdaten von einer Sendeeinheit des Fahrzeugs empfangen wurden. Das Verfahren 200 umfasst einen Schritt 210 des Einlesens der Identifizierungsinformation und der Identifizierungsdaten, wobei die Identifizierungsinformation aus Bilddaten eines von der Überwachungsvorrichtung aufgenommenen Bildes des in dem Überwachungsbereich fahrenden Fahrzeugs erhalten wurden und die Identifizierungsdaten von einer Sendeeinheit des Fahrzeugs empfangen wurden, wobei der Identifizierungsinformation ein den Zeitpunkt des Einlesens der Identifizierungsinformation repräsentierender Informationszeitstempel und den Identifizierungsdaten ein den Zeitpunkt des Empfangens der Identifizierungsdaten repräsentierender Datenzeitstempel zugeordnet wird. Schließlich umfasst das Verfahren 200 einen Schritt 220 des Zuordnens der Identifizierungsinformation und der Identifizierungsdaten zu dem Fahrzeug, wenn eine Zeitdifferenz zwischen dem Informationszeitstempel und dem Datenzeitstempel nicht größer als eine Schwellwertzeitdifferenz ist oder Abspeichern der Identifizierungsinformation und der Identifizierungsdaten für eine Zuordnung der Identifizierungsinformation und der Identifizierungsdaten zu dem Fahrzeug zu einem nachfolgenden Zeitpunkt.

Zusammenfassend ist anzumerken, dass für den Fall, dass für ein Fahrzeug im Rahmen eines Messvorgangs Sensordaten aus verschiedenen Quellen zu unterschiedlichen Zeitpunkten empfangen werden, sich die Frage ergibt, wie diese möglichst sicher einander zugeordnet werden können. Im hier untersuchten Fall handelt es sich konkret um Mess-/Klassifikationsdaten beispielsweise als Identifizierungsinformation 105 einer Messeinheit wie der Kameraeinheit 127 und DSRC-Daten beispielsweise den hier vorgestellten Identifizierungsdaten 120, die von einer DSRC-Bake wie hier der Empfangseinheit 139 empfangen werden. Der Empfangsort der Messdaten (zu einem Kontrollzeitpunkt) liegt dabei in einer festen Entfernung vom Kontrollgerät, die DSRC-Daten können örtlich (und somit auch zeitlich) vor oder nach den Messdaten empfangen werden. Die DSRC-Daten (variable Empfangsentfernung) werden dabei immer den Messdaten (fixe Empfangsentfernung) zugeordnet. Im Betrieb des Messgerätes sollte dann zwischen zwei Verkehrssituationen unterschieden werden:

### 1. Regulärer Verkehr

Ein Fahrzeug wird als regulärer Verkehr eingestuft, wenn es sich beispielsweise mit mindestens 10km/h fortbewegt. In diesem Fall sollten weitere Verarbeitungsschritte erfolgen, nachdem das Fahrzeug die Säule bzw. die Überwachungsvorrichtung 117 komplett passiert hat. Erst nach Ablauf dieser Verarbeitungsschritte können die Messdaten an die Rechnereinheit weitergegeben werden, die für die Zuordnung der Daten verantwortlich ist. Der Abschluss der Zuweisung von DSRC-Daten zu einem Messdatensatz erfolgt beispielsweise nach Ablauf einer konfigurierten Zeitspanne.

### 2. Langsamer Verkehr

Bewegt sich ein Fahrzeug beispielsweise mit weniger als 10 km/h fort, so wird dies beispielsweise als langsamer Verkehr gewertet. Mit abnehmender Geschwindigkeit steigt die Wahrscheinlichkeit, dass sich das Fahrzeug ungleichförmig bewegt, d. h. seine Geschwindigkeit beim Nähern und Passieren der Kontrollsäule bzw. der Überwachungsvorrichtung 117 also zunehmend variiert. Da hier die Möglichkeit besteht, dass gerade ein Stauszenario vorliegt, wird für diese Fälle eine größere Zeitspanne bis zur Zuweisung konfiguriert.

Für eine solche Zuweisung der beiden Datensätze zueinander und damit der Zuweisung dieser Datensätze zu einem Fahrzeug können bestimmte Zuweisungskriterien verwendet werden. Sowohl direkt beim Empfang von Messdaten, als auch bei der endgültigen Zuweisung von DSRC-Daten zu Messdaten wird beispielsweise eine Bewertung hinsichtlich zweier Kriterien vorgenommen:
1. Beide Datensätze sind innerhalb eines zeitlichen Toleranzbereichs entstanden; und
2. Übereinstimmung des ermittelten, bzw. des in den DSRC-Daten deklarierten Kennzeichens

Für jedes Zutreffen eines Bewertungskriteriums wird ein Bewertungspunkt vergeben. Anhand der zugewiesenen Bewertungspunkte wird eine Einteilung der Datenpaare in folgende Klassen vorgenommen:
Bewertung mit 2 Punkten: Übereinstimmung Kennzeichen und Übereinstimmung Zeitbereich
   --> Klasse 1 "Zuordnung sofort": sofortige Zuordnung des DSRC-Datensatzes zum Fahrzeugdatensatz
Bewertung mit 1 Punkt: Übereinstimmung Kennzeichen oder Übereinstimmung Zeitbereich
   --> Klasse 2 "Erneute Prüfung einer Zuordnung unter Verwendung weiterer Daten": Eine Zuordnung kann nach Ablauf einer Wartezeit (ab Empfang Messdaten zu Zuweisungszeit) erfolgen. Dabei erfolgt für beispielsweise alle aktuell vorliegenden Daten eine weitere Bewertung anhand möglicher Klassifikationskriterien (Kennzeichenabweichung, Gewicht, Achsanzahl, Fahrzeugtyp). Ein DSRC-Datensatz wird einem Messdatensatz zugewiesen, wenn der Messdatensatz nach Ablauf seiner Zuweisungszeit von allen möglichen Paarungen von Messdatensätzen mit diesem DSRC-Datensatz die höchste Bewertung erzielt.
Bewertung mit 0 Punkten: keine Übereinstimmung Kennzeichen oder Übereinstimmung Zeitbereich
   --> Klasse 3 "Zuordnung nicht möglich": Wenn weder eine Übereinstimmung hinsichtlich Zeitbereich noch Kennzeichenübereinstimmung vorliegt, erfolgt keine Zuordnung, auch nicht zu einem späteren Zeitpunkt.

Fig. 3 zeigt ein Ablaufdiagramm eines detaillierteren Ausführungsbeispiels des hier vorgestellten Ansatzes als Verfahren 200 zur Zuordnung einer Identifizierungsinformation zumindest eines Fahrzeugs in einem Überwachungsbereich einer Überwachungsvorrichtung und Identifizierungsdaten zu dem Fahrzeug. In dem ersten Schritt 210 des Einlesens werden, ausgehend von einem Startpunkt 300 zunächst in einem Teilschritt 310 die Bilddaten 131 empfangen, wobei optional in einem weiteren Teilschritt 320 weitere synchrone Sensordaten empfangen werden, die zusammen mit den Bilddaten in dem Teilschritt 330 der Erkennung von Zusatzinformationen als Kennzechen 155 (beispielsweise dem Fahrzeugkennzeichen, dem Fahrzeugtyp, einer Achsanzahl und/oder einer Gewichtsklasse des Fahrzeugs 110) einer Analyse unterzogen werden, um die Identifizierungsinformation 105 zu erhalten. In einem Teilschritt 335 werden Transaktionsdaten als Identifizierungsdaten 120 empfangen, die beispielsweise ebenfalls ein Kennmerkmal wie das Fahrzeugkennzeichen und/oder weitere Zusatzinformationen enthalten. In einem ersten Teilschritt 340 des Zuordnens 220 wird dann beispielsweise zunächst überprüft, ob eine Zeitdifferenz zwischen den Bilddaten und den Transaktionsdaten kleiner als ein Schwellwert ist. Dies entspricht einer Überprüfung, ob der dem Informationszeitstempel entsprechende Zeitpunkt um nicht mehr als die Schwellwertzeitdifferenz von dem Zeitpunkt abweicht, der durch den Datenzeitstempel repräsentiert ist. Ferner wird auch zugleich überprüft, ob das Kennzeichen aus den Sensordaten identisch mit demjenigen aus den Transaktionsdaten ist. Dies entspricht einer Überprüfung, ob das Kennzeichen innerhalb eines Toleranzbereichs dem Kennmerkmal entspricht. Sind beide vorstehend genannten Bedingungen erfüllt, erfolgt in einem Zuordnungsteilschritt 345 eine sofortige Zuordnung von Bild und Transaktionsdaten zu dem Fahrzeug, d. h. die Identifikationsinformation 105 und die Identifikationsdaten 120 werden dem Fahrzeug 110 zugeordnet. Ist jedoch entsprechend dem Teilschritt 347 nur eine der vorstehend genannten Bedingungen erfüllt und die andere Bedingung nicht erfüllt, werden die bisher eingelesenen Signale oder Informationen bzw. die davon abgeleiteten Daten, also die Identifikationsinformation 102 und die Identifikationsdaten 120 in dem Speicher 179 für eine zu einem späteren oder nachfolgenden Zeitpunkt erfolgende Zuordnung abgespeichert, wird dies durch den Teilschritt 350 in der Fig. 3 abgebildet ist. Zu diesem späteren Zeitpunkt kann dann diese Zuordnung der Identifikationsinformation 105 und/oder der nachfolgend eingelesenen Identifikationsinformation 105' sowie die Identifikationsdaten 120 und/oder der nachfolgend eingelesenen Identifikationsdaten 120' zu dem Fahrzeug 110 in einem weiteren Teilschritt 355 erfolgen, wenn sie ebenfalls die Bedingungen erfüllen, die beispielsweise auf für die Zuordnung der Identifikationsinformation 105 und der Identifikationsdaten 120 zu dem Fahrzeug 110 erfüllen. Auch können hierzu die Identifikationsinformation 105 mit der nachfolgend eingelesenen Identifikationsinformation 105' und die Identifikationsdaten 120 mit den nachfolgend eingelesenen Identifikationsdaten 120' verknüpft werden. In diesem Fall kann die Zuordnung der Identifikationsinformation(en) 105 und den Identifikationsdaten 120 zu dem betreffenden Fahrzeug 110 erfolgen, entsprechend dem Teilschritt 360 aus Fig. 3. wird jedoch erkannt, dass sowohl der Informationszeitstempel um mehr als die Schwellwertzeitdifferenz von dem Datenzeitstempel abweicht und auch das Kennzeichen nicht innerhalb des Toleranzbereichs mit dem Kennmerkmal übereinstimmt, ist keine Zuordnung der Identifizierungsinformation und der Identifizierungsdaten zu dem Fahrzeug möglich, was dann auch in einem entsprechenden Teilschritt 365 als Signal ausgegeben werden kann.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. **Verfahren** (200) zur Zuordnung einer Identifizierungsinformation (105) zumindest eines Fahrzeugs (110) in einem Überwachungsbereich (115) einer Überwachungsvorrichtung (117) und Identifizierungsdaten (120) zu dem Fahrzeug, wobei die Identifizierungsdaten (120) von einer Sendeeinheit (135) des Fahrzeugs (110) empfangen wurden, wobei das Verfahren (200) die folgenden Schritte aufweist:
- Einlesen (210) der Identifizierungsinformation (105) und der Identifizierungsdaten (120), wobei die Identifizierungsinformation (105) aus Bilddaten (131) eines von der Überwachungsvorrichtung (117) aufgenommenen Bildes (129) des in dem Überwachungsbereich (115) fahrenden Fahrzeugs (110) erhalten wurden und die Identifizierungsdaten (120) von einer Sendeeinheit (135) des Fahrzeugs (110) empfangen wurden, wobei der Identifizierungsinformation (105) ein den Zeitpunkt des Einlesens (210) der Identifizierungsinformation (105) repräsentierender Informationszeitstempel (155) und den Identifizierungsdaten (120) ein den Zeitpunkt des Empfangens der Identifizierungsdaten (120) repräsentierender Datenzeitstempel (163) zugeordnet wird, wobei im Schritt des Einlesens (210) ferner in der Identifizierungsinformation (105) ein das Fahrzeug eindeutig repräsentierendes Kennzeichen (172) eingelesen wird und in den Identifizierungsdaten (120) ein das Fahrzeug (110) eindeutig repräsentierendes Kennmerkmal (174) eingelesen wird; und
- Zuordnen (220) der Identifizierungsinformation (105) und der Identifizierungsdaten (120) zu dem Fahrzeug (110), wenn eine Zeitdifferenz zwischen dem Informationszeitstempel (155) und dem Datenzeitstempel (163) nicht größer als eine Schwellwertzeitdifferenz ist und wenn das Kennzeichen (172) und das Kennmerkmal (174) innerhalb eines Toleranzbereichs übereinstimmen oder
∘ Abspeichern der Identifizierungsinformation (105) und der Identifizierungsdaten (120) für eine Zuordnung der Identifizierungsinformation (105) und der Identifizierungsdaten (120) zu dem Fahrzeug (110) zu einem nachfolgenden Zeitpunkt, wenn eine Zeitdifferenz zwischen dem Informationszeitstempel (155) und dem Datenzeitstempel (163) größer als eine Schwellwertzeitdifferenz ist, oder
∘ Abspeichern der Identifizierungsinformation (105) und der Identifizierungsdaten (120) für eine Zuordnung der Identifizierungsinformation (105) und der Identifizierungsdaten (120) zu dem Fahrzeug (110) zu einem nachfolgenden Zeitpunkt, wenn das Kennzeichen (172) und das Kennmerkmal (174) nicht innerhalb eines Toleranzbereichs übereinstimmen.

2. Verfahren (200) gemäß Anspruch 1, **dadurch gekennzeichnet, dass** im Schritt des Einlesens (210) als Kennzeichen (172) oder als Kennmerkmal (174) ferner eine Achsanzahl und/oder ein Fahrzeugtyp des Fahrzeugs (110) ermittelt wird.

3. Verfahren (200) gemäß einem der vorangegangenen Ansprüche, **dadurch gekennzeichnet, dass** im Schritt des Einlesens (210) Identifizierungsinformationen (105) von mehreren Fahrzeugen (110, 125) eingelesen werden, die aus den Bilddaten (131) von in dem Überwachungsbereich (115) fahrenden Fahrzeugen (110, 125) erhalten wurden und wobei im Schritt (210) des Einlesens Identifizierungsdaten (120) von mehreren Fahrzeugen (110, 125) eingelesen werden, die von Sendeeinheiten (135, 141) der Fahrzeuge (110, 125) empfangen wurden, wobei im Schritt (220) des Zuordnens diejenige Identifizierungsinformation (105) und diejenigen Identifizierungsdaten (120) dem Fahrzeug (110) zugeordnet werden, deren Kennzeichen (172) und Kennmerkmal (174) innerhalb des Toleranzbereichs übereinstimmen und deren Zeitdifferenz zwischen dem Informationszeitstempel (155) und dem Datenzeitstempel (163) nicht größer als die Schwellwertzeitdifferenz ist.

4. Verfahren (200) gemäß einem der vorangegangenen Ansprüche, **dadurch gekennzeichnet, dass** im Schritt (220) des Zuordnens die Identifizierungsinformation (105) und die Identifizierungsdaten (120) nicht dem Fahrzeug (110) zugeordnet werden, wenn der Informationszeitstempel (155) um mehr als die Schwellwertzeitdifferenz von dem Datenzeitstempel (163) abweicht und das Kennzeichen (172) nicht mit dem Kennmerkmal (174) übereinstimmen.

5. Verfahren (200) gemäß einem der vorangegangenen Ansprüche, **gekennzeichnet durch** einen wiederholt ausgeführten Schritt (220) des Zuordnens der abgespeicherten Identifizierungsinformation (105) und der abgespeicherten Identifizierungsdaten (120) oder einer nachfolgend eingelesenen Identifizierungsinformation (105') und nachfolgend eingelesenen Identifizierungsdaten (120') zu dem Fahrzeug (110), wobei der wiederholt ausgeführte Schritt (220) des Zuordnens unter Verwendung von weiteren oder erneut eingelesenen Identifizierungsinformationen (134, 105') und/oder weiteren oder nachfolgend eingelesenen Identifizierungsdaten (145, 120') erfolgt, wobei die weiteren Identifizierungsinformation (134) aus Bilddaten (131) eines von der Überwachungsvorrichtung (117) aufgenommenen Bildes (129) des in dem Überwachungsbereich (115) fahrenden weiteren Fahrzeugs (125) erhalten wurden und/oder die weiteren Identifizierungsdaten (145) von der Sendeeinheit (135) eines weiteren Fahrzeugs (125) empfangen wurden.

6. Verfahren (200) gemäß Anspruch 5, **dadurch gekennzeichnet, dass** der wiederholt ausgeführte Schritt (220) des Zuordnens nach einer vordefinierten Zeitspanne nach dem Schritt des Zuordnens (220) ausgeführt wird.

7. Verfahren (200) gemäß einem der vorangegangenen Ansprüche, **dadurch gekennzeichnet, dass** im Schritt (210) des Einlesens die Identifizierungsinformation (105) unter Verwendung einer Fahrzeugkennzeichen-Erkennungsalgorithmus aus einer Analyse des Bildes (129) Fahrzeugs (110) bestimmt wird und/oder wobei im Schritt (210) des Einlesens die ein von der Sendeeinheit (135) des Fahrzeugs (110) codiert ausgesandtes Fahrzeugkennzeichen (172) eingelesen werden.

8. Verfahren zur Identifizierung eines Fahrzeugs (110) in einem Überwachungsbereich (115) einer Überwachungsvorrichtung (117), wobei das Verfahren die folgenden Schritte aufweist:
- die Schritte des Verfahrens (200) gemäß einem der vorangegangenen Ansprüche 1 bis 7; und
- Klassieren desjenigen Fahrzeugs (110) als identifiziertem Fahrzeug (110), dem die Identifizierungsinformation (105) und die Identifizierungsdaten (120) zugeordnet wurden.

9. Verfahren zur Überwachung eines Verkehrs in einem Überwachungsbereich (115) einer Überwachungsvorrichtung (117), wobei das Verfahren die folgenden Schritte aufweist:
- die Schritte des Verfahrens gemäß Anspruch 8; und
- Ermitteln eines Mautpreises, der für die Fahrt des identifizierten Fahrzeugs (110) in dem Überwachungsbereich (115) zu entrichten ist und/oder Dokumentieren eines Verkehrsregelverstoßes des identifizierten Fahrzeugs (110).

10. Vorrichtung (117), die eingerichtet ist, um die Schritte (210, 220) des Verfahrens (200) gemäß einem der vorangegangenen Ansprüche in entsprechenden Einheiten (133, 170) auszuführen und/oder anzusteuern.

11. Computerprogramm, das dazu eingerichtet ist, die Schritte des Verfahrens (200) gemäß einem der vorangegangenen Ansprüche auf einer Vorrichtung auszuführen und/oder anzusteuern.

12. Maschinenlesbares Speichermedium, auf dem das Computerprogramm nach Anspruch 11 gespeichert ist.

## Claims

1. Method (200) for assigning identification information (105) of at least one vehicle (110) in a monitoring region (115) of a monitoring device (117) and identification data (120) to the vehicle, wherein the identification data (120) have been received from a transmitting unit (135) of the vehicle (110), wherein the method (200) comprises the following steps:
- reading in (210) the identification information (105) and the identification data (120), wherein the identification information (105) have been obtained from image data (131) of an image (129), captured by the monitoring device (117), of the vehicle (110) travelling in the monitoring region (115) and the identification data (120) have been received from a transmitting unit (135) of the vehicle (110), wherein the identification information (105) is assigned an information timestamp (155) representing the time of reading in (210) the identification information (105) and the identification data (120) are assigned a data timestamp (163) representing the time of receiving the identification data (120), wherein in the step of reading in (210), furthermore, an identifier (172) uniquely representing the vehicle is read into the identification information (105) and a characteristic feature (174) uniquely representing the vehicle (110) is read into the identification data (120); and
- assigning (220) the identification information (105) and the identification data (120) to the vehicle (110) if a time difference between the information timestamp (155) and the data timestamp (163) is not greater than a threshold time difference and if the identifier (172) and the characteristic feature (174) match to within a tolerance range, or
∘ storing the identification information (105) and the identification data (120) for an assignment of the identification information (105) and the identification data (120) to the vehicle (110) at a subsequent time if a time difference between the information timestamp (155) and the data timestamp (163) is greater than a threshold time difference, or
∘ storing the identification information (105) and the identification data (120) for an assignment of the identification information (105) and the identification data (120) to the vehicle (110) at a subsequent time if the identifier (172) and the characteristic feature (174) do not match to within a tolerance range.

2. Method (200) according to Claim 1, **characterized in that** in the step of reading in (210), furthermore, a number of axles and/or a vehicle type of the vehicle (110) are/is determined as identifier (172) or as characteristic feature (174).

3. Method (200) according to either of the preceding claims, **characterized in that** in the step of reading in (210), identification information (105) of a plurality of vehicles (110, 125) is read in which has been obtained from the image data (131) of vehicles (110, 125) travelling in the monitoring region (115), and wherein in step (210) of reading in, identification data (120) of a plurality of vehicles (110, 125) are read in which have been received from transmitting units (135, 141) of the vehicles (110, 125), wherein in step (220) of assigning, that identification information (105) and those identification data (120) are assigned to the vehicle (110) whose identifier (172) and characteristic feature (174) match to within the tolerance range and whose time difference between the information timestamp (155) and the data timestamp (163) is not greater than the threshold time difference.

4. Method (200) according to any of the preceding claims, **characterized in that** in step (220) of assigning, the identification information (105) and the identification data (120) are not assigned to the vehicle (110) if the information timestamp (155) differs from the data timestamp (163) by more than the threshold time difference and the identifier (172) does not match the characteristic feature (174).

5. Method (200) according to any of the preceding claims, **characterized by** a repeated step (220) of assigning the stored identification information (105) and the stored identification data (120) or subsequently read-in identification information (105') and subsequently read-in identification data (120') to the vehicle (110), wherein the repeated step (220) of assigning is carried out using further or reread-in identification information (134, 105') and/or further or subsequently read-in identification data (145, 120'), wherein the further identification information (134) has been obtained from image data (131) of an image (129), captured by the monitoring device (117), of the further vehicle (125) travelling in the monitoring region (115) and/or the further identification data (145) have been received from the transmitting unit (135) of a further vehicle (125).

6. Method (200) according to Claim 5, **characterized in that** the repeated step (220) of assigning is performed after a predefined time period after the step of assigning (220).

7. Method (200) according to any of the preceding claims, **characterized in that** in step (210) of reading in, the identification information (105) is ascertained using a vehicle identifier recognition algorithm from an analysis of the image (129) of the vehicle (110) and/or wherein in step (210) of reading in, a vehicle identifier (172) emitted in an encoded manner by the transmitting unit (135) of the vehicle (110) is read in.

8. Method for identifying a vehicle (110) in a monitoring region (115) of a monitoring device (117), wherein the method comprises the following steps:
- the steps of the method (200) according to any of the preceding Claims 1 to 7; and
- classifying that vehicle (110) to which the identification information (105) and the identification data (120) have been assigned as the identified vehicle (110).

9. Method for monitoring traffic in a monitoring region (115) of a monitoring device (117), wherein the method comprises the following steps:
- the steps of the method according to Claim 8; and
- determining a toll price to be paid for the travel of the identified vehicle (110) in the monitoring region (115) and/or documenting a traffic rule violation by the identified vehicle (110).

10. Device (117) configured to perform and/or control the steps (210, 220) of the method (200) according to any of the preceding claims in corresponding units (133, 170).

11. Computer program configured to perform and/or control the steps of the method (200) according to any of the preceding claims on a device.

12. Machine-readable storage medium on which the computer program according to Claim 11 is stored.

## Revendications

1. Procédé (200) destiné à attribuer des informations d'identification (105) d'au moins un véhicule (110) dans une zone de surveillance (115) d'un dispositif de surveillance (117) et des données d'identification (120) au véhicule, les données d'identification (120) ayant été reçues par une unité d'envoi (135) du véhicule (110), le procédé (200) comportant les étapes suivantes :
- lecture (210) des informations d'identification (105) et des données d'identification (120), les informations d'identification (105) ayant été obtenues à partir de données d'image (131) d'une image (129) prise par le dispositif de surveillance (117) du véhicule (110) se déplaçant dans la zone de surveillance (115) et les données d'identification (120) ayant été reçues d'une unité d'envoi (135) du véhicule (110), un horodatage d'informations (155) représentant le moment de la lecture (210) des informations d'identification (105) étant attribué aux informations d'identification (105) et un horodatage de données (163) représentant le moment de la réception des données d'identification (120) étant attribué aux données d'identification (120), un identifiant (172) représentant clairement le véhicule étant lu en outre dans les informations d'identification (105) dans l'étape de la lecture (210) et un numéro d'immatriculation (174) représentant clairement le véhicule (110) étant lu dans les données d'identification (120) ; et
- attribution (220) des informations d'identification (105) et des données d'identification (120) au véhicule (110) lorsqu'une différence de temps entre l'horodatage d'informations (155) et l'horodatage de données (163) n'est pas supérieure à une différence de temps de valeur de seuil et lorsque l'identifiant (172) et le numéro d'immatriculation (174) coïncident à l'intérieur d'une plage de tolérance ou
∘ sauvegarde des informations d'identification (105) et des données d'identification (120) pour une attribution des informations d'identification (105) et des données d'identification (120) au véhicule (110) à un moment qui suit, lorsqu'une différence de temps entre l'horodatage d'informations (155) et l'horodatage de données (163) est supérieure à une différence de temps de valeur de seuil, ou
∘ sauvegarde des informations d'identification (105) et des données d'identification (120) pour une attribution des informations d'identification (105) et des données d'identification (120) au véhicule (110) à un moment qui suit lorsque l'identifiant (172) et le numéro d'immatriculation (174) ne coïncident pas dans une plage de tolérance.

2. Procédé (200) selon la revendication 1, **caractérisé en ce que** dans l'étape de la lecture (210), un nombre d'essieux et/ou un type de véhicule du véhicule (110) sont déterminés en tant qu'identifiant (172) ou en tant que numéro d'immatriculation (174).

3. Procédé (200) selon l'une des revendications précédentes, **caractérisé en ce que** dans l'étape de la lecture (210), des informations d'identification (105) de plusieurs véhicules (110, 125) sont lues, qui ont été obtenues à partir des données d'image (131) de véhicules (110, 125) se déplaçant dans la zone de surveillance (115) et des données d'identification (120) de plusieurs véhicules (110, 125) étant lues dans l'étape de la lecture (210), lesquelles ont été reçues par des unités d'envoi (135, 141) des véhicules (110, 125), ces informations d'identification (105) et ces données d'identification (120) étant attribuées au véhicule (110) dans l'étape de l'attribution (220), dont l'identifiant (172) et le numéro d'immatriculation (174) coïncident à l'intérieur de la plage de tolérance et dont la différence de temps entre l'horodatage d'informations (155) et l'horodatage de données (163) n'est pas supérieure à la différence de temps de valeur de seuil.

4. Procédé (200) selon l'une des revendications précédentes, **caractérisé en ce que** dans l'étape de l'attribution (220), les informations d'identification (105) et les données d'identification (120) ne sont pas attribuées au véhicule (110) lorsque l'horodatage d'informations (155) diverge de l'horodatage de données (163) de plus de la différence de temps de valeur de seuil et que l'identifiant (172) ne coïncide pas avec le numéro d'immatriculation (174).

5. Procédé (200) selon l'une des revendications précédentes, **caractérisé par** une étape de l'attribution (220) exécutée de manière répétée des informations d'identification (105) sauvegardées et des données d'identification (120) sauvegardées ou d'informations d'identification (105') lues par la suite et de données d'identification (120') lues par la suite au véhicule (110), l'étape de l'attribution (220) exécutée de manière répétée étant effectuée en utilisant des informations d'identification supplémentaires ou lues à nouveau (134, 105') et/ou des données d'identification supplémentaires ou lues par la suite (145, 120'), les informations d'identification supplémentaires (134) ayant été obtenues à partir de données d'image (131) d'une image (129) prise par le dispositif de surveillance (117) du véhicule supplémentaire (125) se déplaçant dans la zone de surveillance (115) et/ou les données d'identification supplémentaires (145) ayant été reçues par l'unité d'envoi (135) d'un véhicule supplémentaire (125).

6. Procédé (200) selon la revendication **5, caractérisé en ce que** l'étape de l'attribution (220) exécutée à nouveau est exécutée après un laps de temps prédéfini après l'étape de l'attribution (220).

7. Procédé (200) selon l'une des revendications précédentes, **caractérisé en ce que** dans l'étape de la lecture (210), les informations **d'identification** (105) sont définies en utilisant un algorithme de reconnaissance de plaque d'immatriculation de véhicule à partir d'une analyse de l'image (129) du véhicule (110) et/ou les numéros **d'immatriculation** (172) de véhicule envoyés de manière codée par l'unité d'envoi (135) du véhicule (110) étant lus dans l'étape de la lecture (210).

8. Procédé **d'identification** d'un véhicule (110) dans une zone de surveillance (115) d'un dispositif de surveillance (117), le procédé comportant les étapes suivantes :
- les étapes (200) du procédé selon l'une des revendications précédentes 1 à 7 ; et
- la classification dudit véhicule (110) en tant que véhicule identifié (110), auquel les informations **d'identification** (105) et les données **d'identification** (120) ont été attribuées.

9. Procédé de surveillance **d'un** trafic dans une zone de surveillance (115) **d'un** dispositif de surveillance (117), le procédé comportant les étapes suivantes :
- les étapes du procédé selon la revendication 8 ; et
- détermination d'un prix de péage, qui est à acquitter dans la zone de surveillance (115) pour le déplacement du véhicule (110) identifié et/ou documentation d'une infraction aux règles de circulation du véhicule (110) identifié.

10. Dispositif (117), qui est mis au point pour exécuter et/ou piloter les étapes (210, 220) (200) du procédé selon l'une des revendications précédentes dans des unités (133, 170) correspondantes.

11. Programme informatique, qui est mis au point pour exécuter et/ou piloter les étapes (200) du procédé selon l'une des revendications précédentes, sur un dispositif.

12. Support de stockage lisible, sur lequel le programme informatique selon la revendication 11 est mémorisé.
